# EUROPEAN PATENT SPECIFICATION

(11) **EP 2 912 125 B1**
(45) Date of publication and mention of the grant of the patent: **02.11.2016**
(21) Application number: 13766303.5
(22) Date of filing: 24.09.2013
(51) Int. Cl.: C09D 171/00, B41M 7/02, B41M 7/00, B42D 15/00

(54) **PROTECTIVE COATINGS FOR SECURITY DOCUMENTS**
SCHUTZBESCHICHTUNGEN FÜR SICHERHEITSDOKUMENTE
REVÊTEMENTS PROTECTEURS POUR DES DOCUMENTS DE SÉCURITÉ

(30) Priority: 29.10.2012 EP 12190376
(43) Date of publication of application: 02.09.2015
(73) Proprietor: SICPA HOLDING SA, 1008 Prilly (CH)
(72) Inventor: VEYA, Patrick, CH-1121 Bremblens (CH); GARNIER, Jean, CH-1373 Chavornay (CH)
(74) Representative: Hepp Wenger Ryffel AG
(86) International application number: PCT/EP2013/069769
(87) International publication number: WO 2014/067715

(56) References cited:
- EP-A2- 0 739 923
- EP-A2- 1 344 807
- WO-A1-2004/072378
- DE-A1-102008 058 397

## Description

### FIELD OF THE INVENTION

The present invention relates to the field of the protection of security documents, in particular banknotes, against premature detrimental influence of soil and/or moisture upon use and time.

### BACKGROUND OF THE INVENTION

With the constantly improving quality of color photocopies and printings and in an attempt to protect security documents such as banknotes, value documents or cards, transportation tickets or cards, tax banderols, and product labels against counterfeiting, falsifying or illegal reproduction, it has been the conventional practice to incorporate various security means in these documents. Typical examples of security means include security threads or stripes, windows, fibers, planchettes, foils, decals, holograms, watermarks, security inks comprising optically variable pigments, magnetic or magnetizable thin film interference pigments, interference-coated particles, thermochromic pigments, photochromic pigments, luminescent, infrared-absorbing, ultraviolet-absorbing or magnetic compounds.

Soiling materials like moisture or any dirt are known to affect not only the appearance but also the mechanical performance and thus the lifetime of security documents and in particular banknotes. Indeed, soiling remains the main reason for classifying banknotes as unfit for circulation thus leading to the extraction and destruction of soiled banknotes from circulation. In addition to moisture and dirt, sebum (oily secretion consisting of fat, keratin and cellular materials), as for example squalene (common lipid produced by human skin cells) and proteins are an important source of contamination and soiling component of security documents, in particular banknotes. Indeed, due to the interaction with human fingers, fingerprint deposits accumulate on the surface of the security document and form a layer of aged soil.

It has been a practice to protect security documents with varnishes. With the aim of increasing the durability and cleanliness and thus the circulation lifetime of security documents, in particular banknotes, it has been a conventional practice to protect the security document against soiling, especially moisture and dirt, with a protective varnish so as to provide a protective varnished document. In addition to the increased durability of the document itself, protecting the surface of a banknote simultaneously increases the durability and resistance of overt (i.e. visible to the unaided human eye) and covert (i.e. visible or detectable only with the help of an instrument) security features.

Protective varnishes consist of layer(s) or coating(s) facing the environment of the document. The protective varnish may consist of water-based varnishes or UV-curable varnishes. Information about the varnishing of banknotes can for instance be found in the following papers:
Tom Buitelaar, De Nederlandsche Bank NV, Amsterdam, the Netherlands, "Effects of Banknote varnishing", Currency Conference CSI, Sydney 1999;
Hans A. M. de Heij, De Nederlandsche Bank NV, Amsterdam, the Netherlands, "The design methodology of Dutch banknotes", IS&T/SPIE's 12th International Symposium on Electronic Imaging, Optical Security and Counterfeit Deterrence Techniques III, San Jose, Calif., USA (Jan. 27-28, 2000), Proceedings of SPIE vol. 3973, pp. 2-22;
Frank Wettstein, Cash Division, Swiss National Bank, Berne and Hubert Lieb, Environmental Unit, Swiss National Bank, Zurich, "Life cycle assessment (LCA) of Swiss banknotes", Quarterly Bulletin 3/2000 of the Swiss National Bank, September 2000;
Tom Buitelaar, De Nederlandsche Bank NV, Amsterdam, the Netherlands, "Circulation Fitness Management", Banknote 2003 Conference, Washington D.C., Feb. 3, 2003;
"Bank of England Tests Durability in Circulation Trials", Currency News, March 2012, Vol. 10, No 3, pp. 5.

EP-B 0 256 170 discloses a paper currency printed with ink and coated with a protective layer, wherein the ink contains 1-10 wt-% of micronized wax and the protective coating consists for a major part of cellulose ester or ether.

US 2002/0127339 discloses a method for finishing valuable printed paper sheets, said method consisting of partly or entirely covering the sheets with a varnish used for increasing the durability of said sheets.

WO 2002/094577 discloses a long-lived security paper comprising a security element and a protective layer with a mat surface which is recessed in the region of the security element. The disclosed security paper comprises recessed areas which may be provided with a protective lacquered layer made of brilliant varnish.

US 2007/0017647 discloses a security paper having a flat substrate provided at least partly with a dirt-repellent protective layer for extending the life time and fitness for circulation. The disclosed protective layer comprises at least two lacquer layers, a first lower lacquer layer being formed by a physically drying lacquer layer applied to the substrate and a second upper lacquer layer which protects the substrate from physical and chemical influences.

WO 2006/021856 discloses a method for protecting banknotes and security papers from premature wear due to the handling that they undergo, and thus prolonging their lifetime. The disclosed method comprises a lacquering step which consists in depositing a protective layer on the surface of the security document.

WO 2008/054581 discloses a soil and/or moisture resistant secure document and a method for producing such a secure document. The disclosed method employs a size press or other similar device to force a soil and/or moisture resistant formulation into the pores of the substrate and to remove excess formulation from opposing surfaces thereof.

EP-B 1 932 678 discloses a method for applying a protecting layer of parylene on security documents, in particular banknotes so as to increase their resistance to soiling, wetting and mechanical damage.

EP739923 discloses a curable protective formulation comprising a fluorinated polymer and a urethane polymer. Said fluorinated polymer is a reaction product of a di-hydroxyl-terminated fluoropolyether with a reactant which may be an anhydride or an isocyanate or a halohydrin.

Whereas protective varnishes may comprise surface additives such as for example polymerizable compounds or polymeric additives consisting of siloxane or silicone-containing compounds to further increase anti-soiling properties of security documents, in particular banknotes, comprising said varnishes, the protective varnishes that are commonly used may suffer from a poor oil, fat or grease and water repellency thus reducing the durability and circulation lifetime of the security document.

A need remains for providing a high quality protective varnish exhibiting, when applied to a security document, in particular a banknote, an increased performance in circulation, in particular increased soil release characteristics and an increased resistance against premature detrimental influence of soil upon use and time by increasing oil, fat or grease and moisture/water repellency.

### SUMMARY

It has been surprisingly found that the above mentioned problems can be overcome by radiation curable protective varnishes comprising one or more cationically curable compounds and one or more di-hydroxyl-terminated perfluoropolyether compounds of the general formula HO-(CH₂CH₂O)_{c}-CH₂-CF₂O-(CF₂-CF₂-O)ₐ-(CF₂0)_{b}-CF₂-CH₂-(OCH₂CH₂)_{d}-OH
wherein a and b independently are integers in a range between 0 and 50, wherein a + b ≥ 1, and
wherein c and d may be the same or different and are in the range of 1-20.

Also described and claimed therein are security documents comprising a substrate and a radiation cured coating made of the radiation curable protective varnish described herein.

Also described and claimed therein are processes for making a security document and security documents obtained thereof. The processes comprise a) a step of applying on a substrate the radiation curable protective varnish described herein so as to form a wet coating and b) a step of radiation curing said radiation curable protective varnish so as to form a radiation cured coating.

Also described and claimed therein are uses of the one or more di-hydroxyl-terminated perfluoropolyether compounds described herein for the manufacture of a radiation curable protective varnish described herein, and methods for imparting soil resistance to a security document comprising a substrate, said method comprising a step of applying the radiation curable protective varnish described herein onto said substrate and radiation curing said radiation curable protective varnish.

The radiation curable protective varnishes according to the present invention and security documents comprising said varnishes exhibit a combination of improved anti-soiling characteristics, in particular water/moisture, and/or oil, fat or grease repellency, improved anti-soiling performance upon use, time and exposure to environment and improved anti-fingerprint properties.

### DETAILED DESCRIPTION

The following definitions are to be used to interpret the meaning of the terms discussed in the description and recited in the claims.

As used herein, the article "a" indicates one as well as more than one and does not necessarily limit its referent noun to the singular.

As used herein, the term "about" means that the amount or value in question may be the value designated or some other value about the same. The phrase is intended to convey that similar values within a range of ±5% of the indicated value promote equivalent results or effects according to the invention.

As used herein, the term and/or means that either all or only one of the elements of said group may be present. For example, "A and/or B" shall mean "only A, or only B, or both A and B".

As used herein, the term "protective varnish" refers to any type of varnish, coating or like protective material that may be applied onto the surface of a printed document by a printing or coating process and is capable of protecting said document against soiling by providing anti-soiling characteristics, in particular water/moisture, and/or oil, fat or grease repellency, improved anti-soiling performance upon use, time and exposure to environment and improved anti-fingerprint properties.

The term "composition" refers to any composition which is capable of forming a coating or a layer on a solid substrate and which can be applied preferentially but not exclusively by a printing method.

The term "curing" or "curable" refers to processes including the drying or solidifying, reacting or polymerization of the applied composition or protective varnish in such a manner that it can no longer be removed from the surface onto which it is applied. Examples of curing mechanisms comprise physical curing (e.g. removal of volatile components such as solvents by heating) and chemical curing (e.g. cross-linking of prepolymers).

Described herein are radiation curable protective varnishes comprising one or more cationically curable compounds and one or more di-hydroxyl-terminated perfluoropolyether compounds of the general formula HO-(CH₂CH₂O)_{c}-CH₂-CF₂O-(CF₂-CF₂-O)ₐ-(CF₂O)_{b}-CF₂-CH₂-(OCH₂CH₂)_{d}-OH, wherein a and b independently are integers in a range between 0 and 50 , wherein a + b ≥ 1, and wherein c and d may be the same or different and are in the range of 1-20, preferably 1-10, and more preferably 1-6. Protective varnishes are prepared from compositions in the form of a liquid or pasty state which is capable of forming a layer or a coating on a solid substrate after curing and/or hardening. The radiation curable protective varnishes described herein are particularly suitable for protecting security documents, in particular banknotes, against premature detrimental influence of soil and/or moisture upon use and time.

Radiation curable protective varnishes may be cured by UV-visible light radiation (hereafter referred as UV-Vis-curable) or by electron beam radiation (hereafter referred as EB). Radiation curing advantageously leads to very fast curing processes and hence drastically decreases the preparation time of security documents comprising radiation cured protective varnishes. Radiation curable compositions are known in the art and can be found in standard textbooks such as the series "Chemistry & Technology of UV & EB Formulation for Coatings, Inks & Paints", published in 7 volumes in 1997-1998 by John Wiley & Sons in association with SITA Technology Limited.

Preferably, the radiation curable protective varnishes according to the present invention are UV-Vis light curable protective varnishes (hereafter referred as UV-Vis curable protective varnishes). The radiation curable protective varnishes described herein comprise one or more cationically curable compounds. Cationically curable compounds are cured by cationic mechanisms consisting of the activation by energy of one or more photoinitiators which liberate cationic species, such as acids, which in turn initiate the polymerization of the compound so as to form a binder. Preferably, the one or more cationically curable compounds are present in the radiation curable protective varnish in an amount from about 70 to about 90 wt-%, the weight percents being based on the total weight of the radiation curable protective varnish.

Preferably, the one or more cationically curable compounds are selected from the group consisting of vinyl ethers, propenyl ethers, cyclic ethers such as epoxides, oxetanes, tetrahydrofuranes, lactones, cyclic thioethers, vinyl and propenyl thioethers, hydroxyl-containing compounds and mixtures thereof, preferably cationically curable compounds selected from the group consisting of vinyl ethers, propenyl ethers, cyclic ethers such as epoxides, oxetanes, tetrahydrofuranes, lactones and mixtures thereof.

Typical examples of epoxides include without limitation glycidyl ethers, β-methyl glycidyl ethers of aliphatic or cycloaliphatic diols or polyols, glycidyl ethers of diphenols and polyphenols, glycidyl esters of polyhydric phenols, 1,4-butanediol diglycidyl ethers of phenolformaldehyde (e.g. novolak), resorcinol diglycidyl ethers, alkyl glycidyl ethers, glycidyl ethers comprising copolymers of acrylic esters (e.g. styrene-glycidyl methacrylate or methyl methacrylate-glycidyl acrylate), polyfunctional liquid and solid novolak glycidyl ethers resins, polyglycidyl ethers and poly(β-methylglycidyl) ethers, poly(N-glycidyl) compounds, poly(S-glycidyl) compounds, epoxy resins in which the glycidyl groups or β-methyl glycidyl groups are bonded to hetero atoms of different types, glycidyl esters of carboxylic acids and polycarboxylic acids, limonene monoxide, epoxidized soybean oil, bisphenol-A and bisphenol-F epoxy resins. Examples of suitable epoxides are disclosed, for example, in EP-B 2 125 713. Methods for preparing epoxides are well-known in the art and do not have to be discussed here in detail.

Suitable examples of aromatic, aliphatic or cycloaliphatic vinyl ethers include without limitation compounds having at least one, preferably at least two, vinyl ether groups in the molecule. Examples of preferred vinyl ethers include without limitation triethylene glycol divinyl ether, 1,4-cyclohexanedimethanol divinyl ether, 4-hydroxybutyl vinyl ether, propenyl ether of propylene carbonate, dodecyl vinyl ether, tert-butyl vinyl ether, tert-amyl vinyl ether, cyclohexyl vinyl ether, 2-ethylhexyl vinyl ether, ethylene glycol monovinyl ether, butanediol monovinyl ether, hexanediol monovinyl ether, 1,4-cyclohexanedimethanol monovinyl ether, diethylene glycol monovinyl ether, ethylene glycol divinyl ether, ethylene glycol butylvinyl ether, butane-1,4-diol divinyl ether, hexanediol divinyl ether, diethylene glycol divinyl ether, triethylene glycol divinyl ether, triethylene glycol methylvinyl ether, tetraethylene glycol divinyl ether, pluriol-E-200 divinyl ether (from BASF), polytetrahydrofuran divinyl ether-290, trimethylolpropane trivinyl ether, dipropylene glycol divinyl ether, octadecyl vinyl ether, (4-cyclohexyl-methyleneoxyethene)-glutaric acid methyl ester and (4-butoxyethene)-iso-phthalic acid ester. Methods for preparing vinyl ethers are well-known in the art and do not have to be discussed here in detail.

Examples of hydroxy-containing compounds include without limitation polyester polyols such as for example polycaprolactones or polyester adipate polyols, glycols and polyether polyols, castor oil, hydroxy-functional vinyl and acrylic resins, cellulose esters, such as cellulose acetate butyrate, and phenoxy resins. Further examples of suitable cationically curable compounds are disclosed in EP-B 2 125 713 and EP-B 0 119 425. Methods for preparing hydroxyl-containing compounds are well-known in the art and do not have to be discussed here in detail.

Alternatively, the binder of the radiation curable protective varnishes described herein is a hybrid binder and may be prepared from a mixture of one or more cationically curable compounds and one or more radically curable compounds, wherein the one or more cationically curable compounds are preferably present in the mixture in an amount from about 85 to about 95 wt-% and the one or more radically curable compounds are preferably present in the mixture in an amount from about 5 to about 15 wt-%, the weight percents being based on the total weight of the mixture of the one or more cationically curable compounds and the one or more radically curable compounds. Preferably, the one or more cationically curable compounds and the one or more radically curable compounds are present in the radiation curable protective varnish in an amount from about 70 to about 90 wt-%, the weight percents being based on the total weight of the radiation curable protective varnish.

Radically curable compounds to be used in such a hybrid binder of the present invention are cured by free radical mechanisms consisting of the activation by energy of one or more photoinitiators which liberate free radicals which in turn initiate the polymerization so as to form the binder. Preferably, the radically curable compounds are selected from (meth)acrylates, preferably selected from the group consisting of epoxy (meth)acrylates, (meth)acrylated oils, polyester and polyether (meth)acrylates, aliphatic or aromatic urethane (meth)acrylates, silicone (meth)acrylates, acrylic (meth)acrylates and mixtures thereof. The term "(meth)acrylate" in the context of the present invention refers to the acrylate as well as the corresponding methacrylate. The binder of the radiation curable protective varnishes described herein may be prepared with additional vinyl ethers and/or monomeric acrylates, their ethoxylated equivalents and mixtures thereof. Suitable monomeric acrylates may be selected from the group consisting of 2(2-ethoxyethoxy)ethyl (meth)acrylate, 2-phenoxyethyl (meth)acrylate, C12/C14 alkyl (meth)acrylate, C16/C18 alkyl (meth)acrylate, caprolactone (meth)acrylate, cyclic trimethylolpropane formal acrylate, ethoxylated nonylphenol acrylate, isobornyl (meth)acrylate, isodecyl acrylate, lauryl (meth)acrylate, stearyl (meth)acrylate, octyldecyl (meth)acrylate, tridecyl (meth)acrylate, methoxy poly(ethylene glycol) (meth)acrylate, polypropylene glycol (meth)acrylate, tetrahydrofurfuryl (meth)acrylate, 1,3-butylene glycol di(meth)acrylate, 1,4-butanediol di(meth)acrylate, 1,6-hexanediol di(meth)acrylate, alkoxylated di(meth)acrylate, esterdiol diacrylate, ethoxylated bisphenol A di(meth)acrylate, ethylene glycol di(meth)acrylate, diethylene glycol di(meth)acrylate, triethylene glycol di(meth)acrylate, tetraethylene glycol di(meth)acrylate, dipropyleneglycol di(meth)acrylate, tripropylene glycol di(meth)acrylate, polyethylene glycol di(meth)acrylate, neopentyl glycol di(meth)acrylate, tricyclodecane dimethanol di(meth)acrylate, trimethylolpropane tri(meth)acrylate, ethoxylated trimethylolpropane tri(meth)acrylate, ethoxylated glyceryl tri(meth)acrylate, propoxylated trimethylolpropane tri(meth)acrylate, propoxylated glyceryl tri(meth)acrylate, pentaerythritol tri(meth)acrylate, ethoxylated pentaerythritol tri- and tetra(meth)acrylate, propoxylated pentaerythritol tri(meth)acrylate, trimethylolpropane trimethacrylate, tris (2-hydroxy ethyl) isocyanurate triacrylate, ditrimethylolpropane tetra(meth)acrylate, trimethylolpropane tri(meth)acrylate, dipentaerythritol penta(meth)acrylate, pentaerythritol tetra(meth)acrylate, dipentaerythritol tetra(meth)acrylate, dipentaerythritol penta(meth)acrylate and dipentaerythritol hexa(meth)acrylate as well as mixtures thereof. More preferably, the one or more reactive diluents are selected from the group consisting of 2-phenoxyethyl acrylate, isodecyl acrylate, 1,4-butanediol di(meth)acrylate, 1,6-hexanediol di(meth)acrylate, diethylene glycol di(meth)acrylate, triethylene glycol di(meth)acrylate, dipropyleneglycol di(meth)acrylate, tripropylene glycol di(meth)acrylate, polyethylene glycol di(meth)acrylate, neopentyl glycol di(meth)acrylate, trimethylolpropane tri(meth)acrylate, pentaerythritol tri(meth)acrylate and their ethoxylated equivalents as well as mixtures thereof. Still more preferably, the one or more reactive diluents are selected from the group consisting of trimethylolpropane triacrylate (TMPTA), pentaerythritol triacrylate (PTA), tripropyleneglycol diacrylate (TPGDA), dipropyleneglycol diacrylate (DPGDA), 1,6-hexanediol diacrylate (HDDA) and mixtures thereof and their ethoxylated equivalents (ethoxylated trimethylolpropane triacrylate, ethoxylated pentaerythritol triacrylate, ethoxylated tripropyleneglycol diacrylate, ethoxylated dipropyleneglycol diacrylate and ethoxylated hexanediol diacrylate). When present, the monomeric acrylates are preferably present in an amount from about 5 to about 15 wt-%, the weight percent being based on the total weight of the radiation curable protective varnish. (Meth)acrylates suitable for the present invention and methods for manufacturing them are well-known in the art. Many (meth)acrylates are commercially available.

UV-Vis curing of a monomer, oligomer or prepolymer requires the presence of one or more photoinitiators and may be achieved in a number of ways. As known by those skilled in the art, the one or more photoinitiators are selected according to their absorption spectra and are selected to fit with the emission spectra of the radiation source. Depending on the monomers, oligomers or prepolymers used to prepare the binder comprised in the radiation curable protective varnishes described herein, different photoinitiators might be used.

Suitable examples of cationic photoinitiators are known to those skilled in the art and include without limitation onium salts such as organic iodonium salts (e.g. diaryl iodoinium salts), oxonium (e.g. triaryloxonium salts) and sulphonium salts (e.g. triarylsulphonium salts).

Suitable examples of free radical photoinitiators are known to those skilled in the art and include without limitation acetophenones, benzophenones, alpha-aminoketones, alpha-hydroxyketones, phosphine oxides and phosphine oxide derivatives and benzyldimethyl ketals. Other examples of useful photoinitiators can be found in standard textbooks such as "Chemistry & Technology of UV & EB Formulation for Coatings, Inks & Paints", Volume III, "Photoinitiators for Free Radical Cationic and Anionic Polymerization", 2nd edition, by J. V. Crivello & K. Dietliker, edited by G. Bradley and published in 1998 by John Wiley & Sons in association with SITA Technology Limited.

It may also be advantageous to include a sensitizer in conjunction with the one or more photoinitiators in order to achieve efficient curing. Suitable examples of photosensitizers are known to those skilled in the art and include without limitation isopropyl-thioxanthone (ITX), 1-chloro-2-propoxy-thioxanthone (CPTX), 2-chloro-thioxanthone (CTX) and 2,4-diethyl-thioxanthone (DETX) and mixtures thereof. Alternatively, the photosensitizers described herein may be used in an oligomeric or polymeric form. When present, the one or more photosensitizers are preferably present in an amount from about 0.1 to about 15 wt-%, more preferably about 0.5 to about 5 wt-%, the weight percents being based on the total weight of the radiation curable protective varnishes.

The one or more photoinitiators comprised in the radiation curable protective varnishes are preferably present in an amount from about 0.1 to about 20 wt-%, more preferably about 1 to about 15 wt-%, the weight percents being based on the total weight of the radiation curable protective varnishes.

Alternatively, dual-cure compositions may be used as binders of the varnish of the present invention; these compositions combine thermal drying and radiation curing mechanisms. Typically, such compositions are similar to radiation curing compositions but include a volatile part constituted by water or by a solvent. These volatile constituents are evaporated first using hot air or IR driers, and UV drying is then applied for completing the hardening process. Suitable dual-cure composition are known in the art and do not have to be described in detail here.

The radiation curable protective varnish according to the present invention comprises as essential component one or more di-hydroxyl-terminated perfluoropolyether compounds of the general formula HO-(CH₂CH₂O)_{c}-CH₂-CF₂O-(CF₂-CF₂-O)ₐ-(CF₂O)_{b}-CF₂-CH₂-(OCH₂CH₂)_{d}-OH, wherein a and b independently are integers in a range between 0 and 50, wherein a + b ≥ 1, and wherein c and d may be the same or different and are in the range of 1-20, preferably 1-10, and more preferably 1-6. The one or more di-hydroxyl-terminated perfluoropolyether compounds described herein are preferably comprised in the radiation curable protective varnish according to the present invention in an amount from about 0.1 to about 5 wt-%, more preferably in an amount from about 0.5 to about 4 wt-%, the weight percent being based on the total weight of the radiation curable protective varnish.
According to a preferred embodiment of the present invention, the one or more di-hydroxyl-terminated perfluoropolyether compounds are selected from the group of compounds of the above formula, wherein a + b ≥ 2, and independently are integers in a range between 1 and 50, and wherein c and d may be the same or different and are in the range of 1-20, preferably 1-10, and more preferably 1-6. Those di-hydroxyl-terminated perfluoropolyether compounds are commercially available under the trademark Fluorolink® E10 or E10-H from SOLVAY Solexis, Italy. The di-hydroxyl-terminated perfluoropolyether compounds used in the present invention may be prepared from a perfluoropolyether dimethylester precursor, which may be obtained by methods known in the art, e.g. as described in US-3,847,978, in particular col. 11, example D, and col. 17, example 11. Said perfluoropolyether dimethylester precursor may be reduced to the corresponding dimethylol precursor by methods known in the art, e.g. as described in US-3,972,856, col. 4. The thus obtainable dimethylol precursor may be alkoxylated by methods known in the art, e.g. as described in US-4,775,653, and US-5,057,628. According to the scheme described in e.g. those documents, the compounds suitable for the present invention may be prepared.

The one or more dihydroxyl-terminated perfluoropolyether compounds described herein, have a weight average molecular weight (Mw) between about 100 and about 5000, more preferably between about 500 and about 3000. Unless stated otherwise, "weight average molecular weight" is determined by gel permeation chromatography (GPC).

The one or more di-hydroxyl-terminated perfluoropolyether compounds described herein have preferably a fluorine content in a range from about 50 to about 70 wt-%, more preferably from about 55 to about 65 wt-%, the weight percent being based on the total weight of the one or more dihydroxyl-terminated perfluoropolyether compounds.

Although most of the above di-hydroxyl-terminated perfluoropolyether compounds described herein are in liquid form, one or more solvents may be added to the radiation curable protective varnishes to facilitate the mixing or dispersing of said compounds in the varnish. Suitable solvents include without limitation ethanol, propanol, isopropanol, butanol, isobutanol, glycols, glycol ether (such as for example 1-methoxy-2-propanol (propylene glycol methyl ether) or dipropylene glycol (mono)methyl ether), tetrahydrofuran, toluene, hexane, cyclohexane, heptane, methylene chloride and/or mixtures thereof. When present, the solvent(s) is preferably present in an amount from about 1 to about 10 wt-%, the weight percent being based on the total weight of the radiation curable protective varnish.

The radiation curable protective varnishes described herein may be transparent or slightly colored or tinted and may be more or less glossy.

The radiation curable protective varnishes may further comprise one or more security feature substances, preferably selected from the group consisting of UV, Visible or IR-absorbing materials, luminescent materials, forensic markers, taggants and combinations thereof. Suitable examples of such security feature substances are disclosed in U.S. Pat. No. 6,200,628.

The radiation curable protective varnishes described herein may further comprise one or more additives including without limitation compounds and materials which are used for adjusting physical, rheological and chemical parameters of the protective varnish such as the viscosity (e.g. solvents and surfactants), the consistency (e.g. anti-settling agents, fillers and plasticizers), the foaming properties (e.g. antifoaming agents), the lubricating properties (waxes), UV stability (photostabilizers) and adhesion properties, *etc.* The radiation curable protective varnishes described herein may further comprise one or more additives selected from the group consisting of antimicrobial agents, virucidal agents, biocidal agents, fungicides and combinations thereof. Additives described herein may be present in the radiation curable protective varnishes disclosed herein in amounts and in forms known in the art, including in the form of so-called nano-materials where at least one of the dimensions of the particles is in the range of 1 to 1000 nm.

Also described herein are radiation curable protective varnishes comprising:
a) one or more cationically curable compounds, preferably selected from the group consisting of vinyl ethers, propenyl ethers, cyclic ethers and mixtures thereof such as those as described herein, preferably in an amount from about 70 to about 90 wt-%, the weight percents being based on the total weight of the radiation curable protective varnish;
b) the one or more di-hydroxyl-terminated perfluoropolyether compounds described herein, preferably an amount from about 0.1 to about 5 wt-%, more preferably in an amount from about 0.5 to about 4 wt-%, the weight percent being based on the total weight of the radiation curable protective varnish;
c) one or more cationic photoinitiators preferably selected from the group consisting of onium salts, oxonium salts, sulphonium salts and mixtures thereof, preferably in an amount from about 0.1 to about 20 wt-%, more preferably about 1 to about 15 wt-%, the weight percents being based on the total weight of the radiation curable protective varnish; and
d) optionally one or more additives such as those described herein.

Also described herein are radiation curable protective varnishes comprising:
a) a mixture, preferably in an amount from about 70 to about 90 wt-%, the weight percents being based on the total weight of the radiation curable protective varnish, of one or more cationically curable compounds, preferably selected from the group consisting of vinyl ethers, propenyl ethers, cyclic ethers and mixtures thereof such as those as described herein, and one or more radically curable compounds such as those described herein; preferably the one or more cationically curable compounds are present in an amount from about 85 to about 95 wt-% and the one or more radically curable compounds are present in an amount from about 5 to about 15 wt-%, the weight percent being based on the total weight of the mixture of the one or more cationically curable compounds and the one or more radically curable compounds;
b) the one or more di-hydroxyl-terminated perfluoropolyether compounds described herein, preferably an amount from about 0.1 to about 5 wt-%, more preferably in an amount from about 0.5 to about 4 wt-%, the weight percent being based on the total weight of the radiation curable protective varnish;
c) a mixture, preferably in an amount from about 0.1 to about 20 wt-%, more preferably about 1 to about 15 wt-%, the weight percents being based on the total weight of the radiation curable protective varnish, of one or more cationic photoinitiators preferably selected from the group consisting of onium salts, oxonium salts, sulphonium salts and mixtures thereof and one or more free radical photoinitiators preferably selected from the group consisting of acetophenones, benzophenones, alpha-aminoketones, alpha-hydroxyketones, phosphine oxides, phosphine oxide derivatives, benzyldimethyl ketals and mixtures thereof; and
d) optionally one or more additives such as those described herein.

The radiation curable protective varnishes described herein may be prepared by dispersing or mixing the one or more di-hydroxy-terminated perfluoropolyether compounds, the one or more photoinitiators when present, the one or more additives when present in the presence of the cationically curable compounds and the radically curable compounds when present. The one or more di-hydroxy-terminated perfluoropolyether compounds and the one or more photoinitiators when present may be added to the mixture either during the dispersing or mixing step of all other ingredients or may be added simultaneously or in sequence at a later stage, i.e. after the formation of the liquid inks.

The radiation curable protective varnishes described herein are particularly suitable for protecting security documents against premature detrimental influence of soil, oil, fat, grease and/or moisture/water upon use and time. Security documents are usually protected by several security features which are chosen from different technology fields, manufactured by different suppliers, and embodied in different constituting parts of the security document. Security documents comprise one or more security features. As used herein, the term "security feature" refers to any element on a security document for the purpose of determining its authenticity and protecting it against counterfeits. Typical examples of security features include without limitation cholesteric liquid crystal polymers and pigments, iridescent pigments, thin-film interference pigments, multilayer thin-film interference pigments, interference-layer coated particles, holographic films and pigments, thermochromic pigments, photochromic pigments, ultraviolet-absorbing luminescent compounds, infrared-absorbing compounds, magnetic compounds, forensic markers and taggants as well as threads, windows, fibers, planchettes, foils, and decals. To break the protection of the security document, the counterfeiter would need to obtain all of the implied materials and to get access to all of the required processing technology, which is a hardly achievable task.

Examples of security documents include without limitation value documents and value commercial goods. Typical example of value documents include without limitation banknotes, deeds, tickets, checks, vouchers, fiscal stamps and tax labels, agreements and the like, identity documents such as passports, identity cards, visas, bank cards, credit cards, transactions cards, access documents, entrance tickets and the like. The term "value commercial good" refers to packaging material, in particular for pharmaceutical, cosmetics, electronics or food industry that may comprise one or more security features in order to warrant the content of the packaging like for instance genuine drugs. Example of these packaging material include without limitation labels such as authentication brand labels, tamper evidence labels and seals. Preferably, the security document according to the present invention is selected from the group consisting of banknotes, identity documents such as passports, identity cards, driving licenses and the like and more preferably banknotes.

The present invention provides security documents, preferably banknotes, comprising a substrate and a radiation cured coating made of the radiation curable protective varnish described herein. Preferably, the substrate is selected from the group consisting papers or other fibrous materials such as cellulose, paper-containing materials, plastics and polymers, composite materials and mixtures or combinations thereof. Typical paper, paper-like or other fibrous materials are made from a variety of fibers including without limitation abaca, cotton, linen, wood pulp, and blends thereof. As is well known to those skilled in the art, cotton and cotton/linen blends are preferred for banknotes, while wood pulp is commonly used in non-banknote security documents. Typical examples of plastics and polymers include polyolefins such as polyethylene (PE) and polypropylene (PP), polyamides, polyesters such as poly(ethylene terephthalate) (PET), poly(1,4-butylene terephthalate) (PBT), poly(ethylene 2,6-naphthoate) (PEN) and polyvinylchlorides (PVC). Typical examples of composite materials include without limitation multilayer structures or laminates of paper and at least one plastic or polymer material such as those described hereabove. The radiation curable protective varnish described herein is particularly suitable for the protection of porous substrates. With the aim of further increasing the security level and the resistance against counterfeiting and illegal reproduction of security features and security documents, the substrate may contain watermarks, security threads, fibers, planchettes, windows, foils, decals, coatings and combinations thereof.

The one or more security features of the security document, preferably the banknote, described herein might be present either in the substrate or on the surface of the substrate or a combination of both. When present on the surface of the substrate, the one or more security features are preferably applied or added by any coating or printing method known in the art including without limitation engraved steel plate (also referred in the art as intaglio), silkscreen, offset, letterpress, flexo, gravure, ink-jet printing, roll-, slit-, spray- and powder coating. For applying a foil or decal, the generally known methods of heat- or cold-stamping might be used. Should the security document, preferably the banknote, according to the present invention comprise one or more security features as described above on the surface of the substrate, the protective varnish would increase the durability and resistance of those security features. In such as case, the protective varnish is either in direct contact with one or more security features or in direct contact with the substrate or is in direct contact with both the one or more security features and the substrate.

The security document according to the present invention preferably comprises a radiation cured coating made of the radiation curable protective varnish described herein combining a surface energy less than or equal to about 25 mN/m, preferably between about 10 and about 25 mN/m, and a dispersive surface energy less than or equal to about 18 mN/m, preferably between about 5 and about 18 mN/m. Surface energies are determined at 24±1°C and a relative humidity of 50% according to the Owen-Wendt-Rabel-Kaelbe (OWRK) method (Owens D. K. and Wendt R. C., 1969, J. Appl. Polym. Sci. 13, 1741) by static angle measurement using the sessile drop method. Surface energies are determined through contact angle measurements by using deionised water, diiodomethane and ethylene glycol as test liquids. Surface energies are calculated by using the Owen-Wendt-Rabel-Kaelbe (OWRK) theory. Typically, surface energies can be determined by using Contact Angle Measuring Systems such as those sold by Krüss.

Also described herein are processes for making the security documents, preferably the banknotes, according to the present invention and security documents, preferably banknotes, obtained therefrom. The security documents, preferably the banknotes, according to the present invention are prepared from sheets or rolls of substrate materials. Downstream the application or insertion of a background, patterns, designs and/or one or more security features when present, the radiation curable protective varnish described herein is applied. The application of the radiation curable protective varnish might be provided either before the numbering process or after the numbering process.

The security document according to the present invention may be prepared by a process comprising the steps of:
a) applying on the substrate described herein the radiation curable protective varnish described herein, preferably the UV-Vis radiation curable protective varnish, so as to form a wet coating, and
b) radiation curing, preferably UV-Vis curing, the radiation curable protective varnish so as to form a radiation cured coating.

Preferably, the applying step a) is a printing process selected from the group consisting of screen and flexo printing and more preferably by a printing method selected from the group consisting of flexo printing so as to ensure a constant protective varnish thickness.

Typical amounts of the radiation curable protective varnish that are applied to security documents, preferably banknotes, are of the order of 1.5 to 3.0 grams per m² dry weight, preferably from 1.8 to 2.5 grams per m² dry weight. Wherever present, the radiation cured coating made of the radiation curable protective varnish described herein has preferably an average thickness below 5 µm (microns) and preferably between about 1 and about 3 µm (microns).

Also described herein are uses of the radiation curable protective varnish described herein for providing a protective coating or layer on a security document such as those described herein.

Also described herein are methods for imparting soil resistance to a security document comprising a substrate such as those described herein, said method comprising the step of applying the radiation curable protective varnish described herein, preferably by a printing process selected from the group consisting of screen and flexo printing and more preferably by a printing method selected from the group consisting of flexo printing onto said substrate and radiation curing, preferably UV-Vis curing, said radiation curable protective varnish.

Screen printing (also referred in the art as silkscreen printing) is a stencil process whereby an ink is transferred to a surface through a stencil supported by a fine fabric mesh of silk, synthetic fibers or metal threads stretched tightly on a frame. The pores of the mesh are block-up in the non-image areas and left open in the image area, the image carrier being called the screen. Screen printing might be flat-bed or rotary. During printing, the frame is supplied with the ink which is flooded over the screen and a squeegee is then drawn across it, thus forcing the ink through the open pores of the screen. At the same time, the surface to be printed is held in contact with the screen and the ink is transferred to it. Screen printing is further described for example in The Printing ink manual, R.H. Leach and R.J. Pierce, Springer Edition, 5th Edition, pages 58-62 and in Printing Technology, J. M. Adams and P.A. Dolin, Delmar Thomson Learning, 5th Edition, pages 293-328.

Flexography preferably uses a unit with a doctor blade, preferably a chambered doctor blade, an anilox roller and plate cylinder. The anilox roller advantageously has small cells whose volume and/or density determines the ink application rate. The doctor blade lies against the anilox roller, and scraps off surplus ink at the same time. The anilox roller transfers the ink to the plate cylinder which finally transfers the ink to the substrate. Specific design might be achieved using a designed photopolymer plate. Plate cylinders can be made from polymeric or elastomeric materials. Polymers are mainly used as photopolymer in plates and sometimes as a seamless coating on a sleeve. Photopolymer plates are made from light-sensitive polymers that are hardened by ultraviolet (UV) light. Photopolymer plates are cut to the required size and placed in an UV light exposure unit. One side of the plate is completely exposed to UV light to harden or cure the base of the plate. The plate is then turned over, a negative of the job is mounted over the uncured side and the plate is further exposed to UV light. This hardens the plate in the image areas. The plate is then processed to remove the unhardened photopolymer from the nonimage areas, which lowers the plate surface in these nonimage areas. After processing, the plate is dried and given a post-exposure dose of UV light to cure the whole plate. Preparation of plate cylinders for flexography is described in Printing Technology, J. M. Adams and P.A. Dolin, Delmar Thomson Learning, 5th Edition, pages 359-360.

Due to their high emulsion lifetime, the radiation curable protective varnishes according to the present invention do not require any pre-treatment such as an additional mixing step, before their application on a security document. The radiation curable protective varnishes according to the present invention are particularly suitable for protecting security documents thus leading to security documents exhibiting increased anti-soiling properties upon use, time and exposure to specific conditions such as moisture and dirt of the environment, as well as human skin and human sweat/sebum. Indeed, due to the interaction with human fingers, fingerprint deposits accumulate on the surface of the security document and form a layer of aged soil. Moreover, the radiation curable protective varnishes according to the present invention are particularly suitable for increasing the anti-soiling characteristics of security documents for use in tropical countries having high level of relative humidity and/or temperature.

### EXAMPLES

The present invention is now described in greater detail with respect to non-limiting examples.

**Table 1**

| Ingredients | C1 wt-% | C2 wt-% | C3 wt-% | C4 wt-% | C5 wt-% | C6 wt-% | C7 wt% | C8 wt-% | C9 Wt-% | C10 wt-% | E1 wt-% | E2 wt-% |
|---|---|---|---|---|---|---|---|---|---|---|---|---|
| cycloaliphatic diepoxide (3,4-Epoxycyclohexane)methyl 3,4-epoxycyclohexylcarboxylate sold as UVACURE^{®} 1500 by Cytec | 70.20 | 64.70 | 69.45 | 64.20 | 66.95 | 61.70 | 65.20 | 59.70 | 67.70 | 62.20 | 67.70 | 62.70 |
| trimethylolpropane oxetane sold by Perstorp | 15.05 | 12.6 | 15.05 | 12.6 | 15.05 | 12.6 | 15.05 | 12.6 | 15.05 | 12.6 | 15.05 % | 12.6 |
| acrylated epoxy resin sold as Ebecryl^{®} 2959 by Cytec | | 8 | | 8 | | 8 | | 8 | | 8 | | 8 |
| photoinitiator: a mixture of triarylsulphonium hexafluorophosphate salts in propylene carbonate sold as Speedcure 992 by Lambson | 6.45 | 5.4 | 6.45% | 5.4 | 6.45 | 5.4 | 6.45 | 5.4 | 6.45 | 5.4 | 6.45 | 5.4 |
| photoinitiator: (4-(2-hydroxyethoxy)phenyl-(2-hydroxy-2-propyl)ketone sold as Irgacure^{®} 2959 by BASF | | 1.5 | | 1.5 | | 1.5 | | 1.5 | | 1.5 | | 1.5 |
| Solution of a polyether modified polydimethylsiloxane sold as Byk^{®} 330 by Byk | | | 0.5 | 0.5 | | | | | | | | |
| Solution of polyester modified acrylic functional poly-dimethyl-siloxane sold as Byk^{®} 371 by Byk | | | | | 3 | 3 | | | | | | |
| Hydroxy-functional polydimethyl siloxane sold as TEGOMER^{®} H-Si 2311 by Evonik | | | | | | | 5 | 5 | | | | |
| HO-CH₂-CF₂O-(CF₂-CF₂-O)ₐ-(CF₂O)_{b}-CF₂-CH₂-OH with a Mw of 1200-1500 and a fluorine content of 60-65 wt-% sold as Fluorolink^{®}-D10H® by Solvay Solexis | | | | | | | | | 2.5 | 2.5 | | |
| HO-(CH₂CH₂O)_{c}-CH₂-CF₂O-(CF₂-CF₂-O)ₐ-(CF₂O)_{d}-CF₂-CH₂-(OCH₂CH)_{d}-OH with a Mw of 1400-1700 and a fluorine content of 55-60 wt-% sold as Fluorolink^{®}-E10H® by Solvay Solexis | | | | | | | | | | | 2.5 | 2.5 |
| anti-foaming agent: organo-modified polysiloxane with fumed silica sold as Tego Airex900 by Evonik | 0.3 | 0.3 | 0.3 | 0.3 | 0.3 | 0.3 | 0.3 | 0.3 | 0.3 | 0.3 | 0.3 | 0.3 |
| matting agent; untreated thermal silica Sold as ACEMATT^{®} TS 100 by Evonik | 5 | 3.5 | 5.25 | 3.5 | 5.25 | 3.5 | 5 | 3.5 | 5 | 3.5 | 5 | 3 |
| isopropanol | 3 | 4 | 3 | 4 | 3 | 4 | 3 | 4 | 3 | 4 | 3 | 4 |
| Viscosity [mPa.s] | 230 | 264 | 273 | 261 | 286 | 274 | 271 | 263 | 247 | 250 | 248 | 251 |

500g of each radiation curable protective varnish C1-C10 and E1-E2 were prepared by first pre-mixing the three first ingredients of Table 1 and the matting agent (about 15 minutes at 1500 rpm) and then adding the other ingredients of Table 1 and mixing the so-obtained mixture (about 10 additional minutes at 1000 rpm). About 24 hours after the mixing, viscosity was adjusted by adding either the matting agent or the isopropanol so as to obtain a viscosity between 200 and 300 mPa s. Mixing was performed at room temperature with a 10.0 cm dispersing blade. No temperature elevation due to friction was noticeable by hand contact with steel mixing containers. The viscosities given in Table 1 were measured on 9 g of the radiation curable protective varnish C1-C10 and E1-E2 at 25°C on a Brookfield machine (model "DV-I Prime", small sample adapter, spindle SC4-21 at 100 rpm).

The radiation curable protective varnishes were independently applied to a polymer substrate (Guardian^{®} supplied by Securency) so as to form a wet coating having a thickness of 2-3 µm (microns) by a laboratory pilot flexo printing unit (N. Schläfli Maschinen) with an anilox (160l/m, 8 cm³/m²) and a rubber printing cylinder of 65-75 Shores.

UV-curing the radiation curable protective varnishes so as to form a radiation cured coating was performed with an on-line UV dryer (system VPC-20 supplied by GEW) comprising a standard mercury UV lamp (ref 14957) at a power of 100% (160W/cm) and a conveyor speed of 50 m/min.

The surface energy of the radiation cured protective varnishes was determined from static contact angle measurements with a standard sessile drop arrangement using a Krüss DSA100 instrument. Contact angles of water, ethylene glycol and diiodomethane deposited on the radiation cured coatings were measured to determine the surface energy. All measurements were taken at 24±1°C and a relative humidity of 50%. Contact angles given in Table 2 having been measured 24 hours after the preparation of the radiation cured protective varnishes and consist of average values of three measurements. Contact angles given in Table 3 having been measured one month (conditioning conditions: at 20-25°C and a relative humidity of 50-70%), after the preparation of the radiation cured protective varnishes and consist of average values of three measurements. Contact angles were determined with a constant drop volume of 3.0 µL for water and ethylene glycol and 1.5 µL for diiodomethane.

The surface energies were calculated by using the Owen-Wendt-Rabel-Kaelbe (OWRK) theory. The following reference values were used for calculations (Contact Angles, Work of Adhesion, and Interfacial Tensions at a Dissolving Hydrocarbon Surface; G.Ström, M.Frederik-sson, P.Stenius; J. Coll. Interf. Sci. 10, 119/2, 352-361):
water (72.80 mN/m, dispersive: 21.80 mN/m, polar: 51.00 mN/m),
ethylene glycol (47.70 mN/m, dispersive: 30.90 mN/m, Polar: 16.80 mN/m), diiodomethane (50.80 mN/m, dispersive: 50.80 mN/m, Polar: 0.00 mN/m.

**Table 2: contact angle values and surface energies measured one day after preparation of the protective varnishes**

| | **Contact angle [°]** | | | **Surface energy γ[mN/m]** | | | **R²** |
|---|---|---|---|---|---|---|---|
| | **water** | **ethylene glycol** | **diiodomethane** | **γ^{dispersive}** | **γ^{polar}** | **γ** | **(OWRK plot)** |
| **C1** | 67.8 | 37.7 | 33.0 | **39.0** | 7.6 | **46.6** | 0.9438 |
| **C2** | 67.2 | 37.1 | 32.2 | **39.3** | 7.8 | **47.1** | 0.9425 |
| **C3** | 73.7 | 48.6 | 44.3 | **33.9** | 6.5 | **40.4** | 0.9404 |
| **C4** | 73.5 | 46.0 | 45.7 | **33.8** | 6.8 | **40.6** | 0.9611 |
| **C5** | 97.6 | 80.6 | 70.6 | **20.2** | 1.8 | **22.0** | 0.8537 |
| **C6** | 98.9 | 82.8 | 67.6 | **21.3** | 1.2 | **22.5** | 0.7275 |
| **C7** | 99.7 | 79.8 | 68.3 | **21.8** | 1.1 | **22.9** | 0.8430 |
| **C8** | 97.2 | 77.7 | 66.6 | **22.6** | 1.5 | **24.1** | 0.8559 |
| **C9** | 73.4 | 46.5 | 67.3 | **25.3** | 10.3 | **35.6** | 0.9970 |
| **C10** | 74.4 | 47.8 | 67.7 | **23.7** | 10.7 | **34.4** | 0.9987 |
| **E1** | 102.7 | 85.5 | 89.8 | **12.4** | 2.7 | **15.1** | 0.9950 |
| **E2** | 101.0 | 84.5 | 89.0 | **12.6** | 3.1 | **15.7** | 0.9909 |

**Table 3: contact angle values and surface energies measured one month after preparation of the protective varnishes**

| | **Contact angle [°]** | | | **Surface energy γ[mN/m]** | | | **R²** |
|---|---|---|---|---|---|---|---|
| | **water** | **ethylene glycol** | **diiodomethane** | **γ^{dispersive}** | **γ^{polar}** | **γ** | **(OWRK plot)** |
| **C1** | 60.0 | 35.3 | 49.1 | 31.3 | 14.3 | 45.6 | 0.9700 |
| **C2** | 61.4 | 40.2 | 49.7 | 30.4 | 13.8 | 44.2 | 0.9581 |
| **C3** | 67.1 | 52.3 | 61.9 | 23.9 | 13.5 | 37.4 | 0.9577 |
| **C4** | 60.4 | 49.2 | 59.2 | 24.4 | 16.9 | 41.3 | 0.9452 |
| **C5** | 83.5 | 65.9 | 64.3 | 23.4 | 5.5 | 28.9 | 0.9393 |
| **C6** | 90.3 | 68.4 | 65.7 | 23.7 | 3.2 | 26.9 | 0.9619 |
| **C7** | 99.6 | 79.6 | 69.8 | 21.2 | 1.3 | 22.5 | 0.8782 |
| **C8** | 97.3 | 77.9 | 65.8 | 22.9 | 1.4 | 24.3 | 0.8352 |
| **C9** | 73.0 | 48.9 | 74.4 | 20.2 | 13.2 | 33.4 | 0.9996 |
| **C10** | 75.5 | 52.0 | 70.8 | 21.7 | 10.8 | 32.5 | 0.9974 |
| **E1** | 101.3 | 83.7 | 92.8 | 11.5 | 3.5 | 15.0 | 1.0000 |
| **E2** | 100.7 | 84.7 | 93.7 | 10.9 | 3.9 | 14.8 | 0.9985 |

As expressed by their high contact angles with water, the protective varnishes comprising the ethoxylated fluor-based surfacing agents (E1 and E2) exhibited high repellence against aqueous media, said repellence being slightly better than co-polymerizable silicone-based agent (C5-C8). Moreover, their repellency toward unpolar media was significantly better than any of the other examples provided (as expressed by the contact angles obtained using diiodomethane). Moreover, the protective varnishes comprising the di-hydroxyl-terminated ethoxylated perfluoropolyether compounds (E1 and E2) exhibited a significantly higher repellency towards both polar and unpolar media in comparison with the comparative di-hydroxyl-terminated perfluoropolyether compounds (C9 and C10). The combination of both polar and unpolar repellencies provided by the present invention is a key to the advantages provided by the addition of ethoxylated fluor-based surfacing agents in the protective varnishes. In line with the observed repellencies, the protective varnishes according to the present invention (E1 and E2) have particularly low surface energies compared to the comparative examples C1-C10.

In addition to their high repellency towards both polar and unpolar media, said repellencies being expressed by contact angle values of water and diiodomethane respectively, the protective varnishes according to the present invention (E1 and E2) advantageously did not exhibit a significant decrease of both their repellencies upon time. Indeed, the protective varnishes according to the present invention (E1 and E2) are the only examples that combine high contact angle values of water and diiodomethane and good retention of said contact angle values upon time. Whereas the comparative examples C7 and C8 exhibited high contact angles of water and good retention of said contact angle values upon time, comparative examples C7 and C8 suffered from low contact angle values of diiodomethane.

## Claims

1. A radiation curable protective varnish comprising one or more cationically curable compounds and one or more di-hydroxyl-terminated perfluoropolyether compounds of the general formula HO-(CH₂CH₂O)_{c}-CH₂-CF₂O-(CF₂-CF₂-O)a-(CF₂O)_{b}-CF₂-CH₂-(OCH₂CH₂)_{d}-OH
wherein a and b independently are integers in a range between 0 and 50 and wherein a + b ≥ 1, and
wherein c and d may be the same or different and are in the range of 1-20.

2. The radiation curable protective varnish according to claim 1 being UV-Vis-curable protective varnishes.

3. The radiation curable protective varnish according to any preceding claim, wherein the one or more cationically curable compounds are selected from the group consisting of vinyl ethers, propenyl ethers, cyclic ethers and mixtures thereof.

4. The radiation curable protective varnish according to any preceding claim, further comprising one or more cationic photoinitiators selected from the group consisting of onium salts, oxonium salts, sulphonium salts and mixtures thereof, preferably in an amount from about 0.1 to about 20 wt-%, the weight percents being based on the total weight of the radiation curable protective varnish.

5. The radiation curable protective varnish according to any preceding claim, wherein the one or more di-hydroxyl-terminated perfluoropolyether compounds are present in an amount from about 0.1 to about 5.0 wt-%, the weight percents being based on the total weight of the radiation curable protective varnish.

6. The radiation curable protective varnish according to any preceding claim, wherein the one or more di-hydroxyl-terminated perfluoropolyether compounds have weight average molecular weight (Mw) between about 500 and about 3000.

7. The radiation curable protective varnish according to any preceding claim further comprising one or more radically curable compounds.

8. The radiation curable protective varnish according to claim 7, wherein the one or more cationically curable compounds are present in an amount from about 85 to about 95 wt-% and the one or more radically curable compounds are present in an amount from about 5 to about 15 wt-%, the weight percent being based on the total weight of the mixture of the one or more cationically curable compounds and the one or more radically curable compounds.

9. The radiation curable protective varnish according to claim 7 or 8 further comprising one or more free radical photoinitiators.

10. A security document comprising a substrate and a radiation cured coating obtained by radiation curing of a radiation curable protective varnish recited in any one of claims 1 to 9.

11. The security document according to claim 10, wherein the substrate is selected from the group consisting papers or other fibrous materials, paper-containing materials, plastics and polymers, composite materials and mixtures or combinations thereof.

12. The security document according to claim 10 or 11, wherein the radiation cured coating made of the radiation curable protective varnish has a surface energy less than or equal to about 25 mN/m and a dispersive surface energy less than or equal to about 18 mN/m.

13. A process for making a security document comprising a) a step of applying on a substrate the radiation curable protective varnish recited in any one of claims 1 to 9 so as to form a wet coating and b) a step of radiation curing said radiation curable protective varnish so as to form a radiation cured coating.

14. A use of the radiation curable protective varnish recited in any one of claims 1 to 9 for providing a protective coating or layer on a security document.

15. A method for imparting soil resistance to a security document comprising a substrate, said method comprising a step of applying the radiation curable protective varnish recited in any one of claims 1 to 9 onto said substrate and radiation curing said radiation curable protective varnish.

16. A use of the one or more di-hydroxyl-terminated perfluoropolyether compounds recited in any one of claims 1 to 9 for the manufacture of a radiation curable protective varnish according to any one of claims 1 to 9.

## Patentansprüche

1. Strahlungshärtbarer Schutzlack, umfassend eine oder mehrere kationisch härtbare Verbindungen und eine oder mehrere dihydroxylterminierte Perfluorpolyetherverbindungen der allgemeinen Formel HO-(CH₂CH₂O)_{c}-CH₂-CF₂O- (CF₂-CF₂-O)ₐ-(CF₂O)_{b}-CF₂-CH₂-(OCH₂CH₂)_{d}-OH
wobei a und b unabhängig voneinander für ganze Zahlen im Bereich zwischen 0 und 50 stehen und wobei a + b ≥ 1 und
wobei c und d gleich oder verschieden sein können und im Bereich von 1-20 liegen.

2. Strahlungshärtbarer Schutzlack nach Anspruch 1, bei dem es sich um UV-Vis-härtbare Schutzlacke handelt.

3. Strahlungshärtbarer Schutzlack nach einem der vorhergehenden Ansprüche, wobei die eine bzw. die mehreren kationisch härtbaren Verbindungen aus der Gruppe bestehend aus Vinylethern, Propenylethern, cyclischen Ethern und Mischungen davon ausgewählt sind.

4. Strahlungshärtbarer Schutzlack nach einem der vorhergehenden Ansprüche, ferner umfassend einen oder mehrere kationische Photoinitiatoren aus der Gruppe bestehend aus Oniumsalzen, Oxoniumsalzen, Sulfoniumsalzen und Mischungen davon, vorzugsweise in einer Menge von etwa 0,1 bis etwa 20 Ges.-%, wobei sich die Gewichtsprozentangaben auf das Gesamtgewicht des strahlungshärtbaren Schutzlacks beziehen.

5. Strahlungshärtbarer Schutzlack nach einem der vorhergehenden Ansprüche, wobei die eine bzw. die mehreren dihydroxylterminierten Perfluorpolyetherverbindungen in einer Menge von etwa 0, 1 bis etwa 5,0 Gew.-% vorliegen, wobei sich die Gewichtsprozentangaben auf das Gesamtgewicht des strahlungshärtbaren Schutzlacks beziehen.

6. Strahlungshärtbarer Schutzlack nach einem der vorhergehenden Ansprüche, wobei die eine bzw. die mehreren dihydroxylterminierten Perfluorpolyetherverbindungen ein Gewichtsmittel-Molekulargewicht (Mw) zwischen etwa 500 und etwa 3000 aufweisen.

7. Strahlungshärtbarer Schutzlack nach einem der vorhergehenden Ansprüche, ferner umfassend eine oder mehrere radikalisch härtbare Verbindungen.

8. Strahlungshärtbarer Schutzlack nach Anspruch 7, wobei die eine bzw. die mehreren kationisch härtbaren Verbindungen in einer Menge von etwa 85 bis etwa 95 Gew.-% vorliegen und die eine bzw. die mehreren radikalisch härtbaren Verbindungen in einer Menge von etwa 5 bis etwa 15 Gew.-% vorliegen, wobei sich die Gewichtsprozentangaben auf das Gesamtgewicht der Mischung aus der einen bzw. den mehreren kationisch härtbaren Verbindungen und der einen bzw. den mehreren radikalisch härtbaren Verbindungen beziehen.

9. Strahlungshärtbarer Schutzlack nach Anspruch 7 oder 8, ferner umfassend einen oder mehrere radikalische Photoinitiatoren.

10. Sicherheitsdokument, umfassend ein Substrat und eine durch Strahlungshärtung eines strahlungshärtbaren Schutzlacks gemäß einem der Ansprüche 1 bis 9 erhaltene strahlungsgehärtete Beschichtung.

11. Sicherheitsdokument nach Anspruch 10, wobei das Substrat aus der Gruppe bestehend aus Papieren oder anderen Fasermaterialien, papierhaltigen Materialien, Kunststoffen und Polymeren, Verbundwerkstoffen und Mischungen oder Kombinationen davon ausgewählt ist.

12. Sicherheitsdokument nach Anspruch 10 oder 11, wobei die aus dem strahlungshärtbaren Schutzlack hergestellte strahlungsgehärtete Beschichtung eine Oberflächenenergie kleiner gleich etwa 25 mN/m und eine dispersive Oberflächenenergie kleiner gleich etwa 18 mN/m aufweist.

13. Verfahren zur Herstellung eines Sicherheitsdokuments, umfassend a) einen Schritt des Aufbringens des strahlungshärtbaren Schutzlacks gemäß einem der Ansprüche 1 bis 9 auf ein Substrat zur Bildung einer feuchten Beschichtung und b) einen Schritt des Strahlungshärtens des strahlungshärtbaren Schutzlacks zur Bildung einer strahlungsgehärteten Beschichtung.

14. Verwendung eines strahlungshärtbaren Schutzlacks gemäß einem der Ansprüche 1 bis 9 zur Bereitstellung einer Schutzbeschichtung oder Schutzschicht auf einem Sicherheitsdokument.

15. Verfahren zur schmutzresistenten Ausrüstung eines Sicherheitsdokuments, das ein Substrat umfasst, wobei das Verfahren einen Schritt des Aufbringens des strahlungshärtbaren Schutzlacks gemäß einem der Ansprüche 1 bis 9 auf das Substrat und des Strahlungshärtens des strahlungshärtbaren Schutzlacks umfasst.

16. Verwendung der einen bzw. der mehreren dihydroxylterminierten Perfluorpolyetherverbindungen gemäß einem der Ansprüche 1 bis 9 zur Herstellung eines strahlungshärtbaren Schutzlacks nach einem der Ansprüche 1 bis 9.

## Revendications

1. Vernis protecteur durcissable par un rayonnement comprenant un ou plusieurs composés durcissables par voie cationique et un ou plusieurs composés de type perfluoropolyéther terminés par dihydroxyle de formule générale HO- (CH₂CH₂O)_{c}-CH₂CF₂O-(CF₂-CF₂-O)ₐ-(CF₂O)_{b}-CF₂-CH₂-(OCH₂CH₂)_{d}-OH
où a et b représentent, indépendamment, des entiers dans une plage entre 0 et 50, avec a + b ≥ 1, et
où c et d peuvent être identiques ou différents et sont situés dans la plage de 1-20.

2. Vernis protecteur durcissable par un rayonnement selon la revendication 1, ledit vernis étant un vernis protecteur durcissables par un rayonnement UV-Vis.

3. Vernis protecteur durcissable par un rayonnement selon l'une quelconque revendication précédente, ledit un ou lesdits plusieurs composés durcissables par voie cationique étant choisis dans le groupe constitué par les vinyléthers, les propényléthers, les éthers cycliques et leurs mélanges.

4. Vernis protecteur durcissable par un rayonnement selon l'une quelconque revendication précédente, comprenant en outre un ou plusieurs photo-initiateurs cationiques, choisis dans le groupe constitué par les sels d'onium, les sels d'oxonium, les sels de sulfonium et leurs mélanges, de préférence en une quantité d'environ 0,1 à environ 20% en poids, les pourcentages en poids étant basés sur le poids total du vernis protecteur durcissable par un rayonnement.

5. Vernis protecteur durcissable par un rayonnement selon l'une quelconque revendication précédente, ledit un ou lesdits plusieurs composés de type perfluoropolyéther terminés par dihydroxyle étant présents en une quantité d'environ 0,1 à environ 5,0% en poids, les pourcentages en poids étant basés sur le poids total du vernis protecteur durcissable par un rayonnement.

6. Vernis protecteur durcissable par un rayonnement selon l'une quelconque revendication précédente, ledit un ou lesdits plusieurs composés de type perfluoropolyéther terminés par dihydroxyle présentant un poids moléculaire pondéral moyen (Mw) entre environ 500 et environ 3000.

7. Vernis protecteur durcissable par un rayonnement selon l'une quelconque revendication précédente, comprenant en outre un ou plusieurs composés durcissables par voie radicalaire.

8. Vernis protecteur durcissable par un rayonnement selon la revendication 7, ledit un ou lesdits plusieurs composés durcissables par voie cationique étant présents en une quantité d'environ 85 à environ 95% en poids et ledit un ou lesdits plusieurs composés durcissables par voie radicalaire étant présents en une quantité d'environ 5 à environ 15% en poids, le pourcentage en poids étant basé sur le poids total du mélange dudit un ou desdits plusieurs composés durcissables par voie cationique et dudit un ou desdits plusieurs composés durcissables par voie radicalaire.

9. Vernis protecteur durcissable par un rayonnement selon la revendication 7 ou 8, comprenant en outre un ou plusieurs photo-initiateurs à radicaux libres.

10. Document de sécurité comprenant un substrat et un revêtement durci par un rayonnement obtenu par durcissement par un rayonnement d'un vernis protecteur durcissable par un rayonnement cité dans l'une quelconque des revendications 1 à 9.

11. Document de sécurité selon la revendication 10, le substrat étant choisi dans le groupe constitué par les papiers ou d'autres matériaux fibreux, les matériaux contenant du papier, les plastiques et les polymères, les matériaux composites et leurs mélanges ou combinaisons.

12. Document de sécurité selon la revendication 10 ou 11, le revêtement durci par un rayonnement, produit en vernis protecteur durcissable par un rayonnement présentant une énergie superficielle inférieure ou égale à environ 25 mN/m et une énergie superficielle dispersive inférieure ou égale à environ 18 mN/m.

13. Procédé de production d'un document de sécurité, comprenant a) une étape d'application, sur un substrat, du vernis protecteur durcissable par un rayonnement cité dans l'une quelconque des revendications 1 à 9 de manière à former un revêtement humide et b) une étape de durcissement par un rayonnement dudit vernis protecteur durcissable par un rayonnement de manière à former un revêtement durci par un rayonnement.

14. Utilisation du vernis protecteur durcissable par un rayonnement cité dans l'une quelconque des revendications 1 à 9 pour réaliser un revêtement protecteur ou une couche protectrice sur un document de sécurité.

15. Procédé pour conférer une résistance aux souillures à un document de sécurité comprenant un substrat, ledit procédé comprenant une étape d'application du vernis protecteur durcissable par un rayonnement cité dans l'une quelconque des revendications 1 à 9 sur ledit substrat et de durcissement par un rayonnement dudit vernis protecteur durcissable par un rayonnement.

16. Utilisation dudit un ou desdits plusieurs composés de type perfluoropolyéther terminés par dihydroxyle cités dans l'une quelconque des revendications 1 à 9 pour la préparation d'un vernis protecteur durcissable par un rayonnement selon l'une quelconque des revendications 1 à 9.
